# EUROPÄISCHE PATENTSCHRIFT

(11) **EP 1 390 111 B1**
(45) Veröffentlichungstag und Bekanntmachung des Hinweises auf die Patenterteilung: **17.11.2010**
(21) Anmeldenummer: 02732611.5
(22) Anmeldetag: 12.04.2002
(51) Int. Cl.: B01D 3/32

(54) **BEFESTIGUNGSTEILE FÜR TRENNWANDELEMENTE EINER MEHRTEILIGEN TRENNWAND IN EINER KOLONNE**
FIXING PARTS FOR PARTITION ELEMENTS OF A MULTI-SECTION PARTITION PLATE OF A COLUMN
ELEMENTS DE FIXATION POUR ELEMENTS D'UNE PAROI DE SEPARATION A ELEMENTS MULTIPLES DANS UNE COLONNE

(30) Priorität: 18.05.2001 DE 10124690
(43) Veröffentlichungstag der Anmeldung: 25.02.2004
(73) Patentinhaber: JULIUS MONTZ GmbH, D-40723 Hilden (DE)
(72) Erfinder: ZICH, Egon, 42799 Leichlingen (DE); JANSEN, Helmut, 41542 Dormagen (DE); RIETFORT, Thomas, 46236 Bottrop (DE); KAIBEL, Björn, 40723 Hilden (DE)
(74) Vertreter: Cohausz, Helge B.
(86) Internationale Anmeldenummer: PCT/EP2002/004097
(87) Internationale Veröffentlichungsnummer: WO 2002/094408

(56) Entgegenhaltungen:
- EP-A- 1 088 577
- BE-A- 576 656

## Beschreibung

Die Erfindung betrifft eine Kolonne zur Destillation insbesondere Packungs-und/oder Bodenkolonne, die Trennungen und/oder chemische Reaktionen durchführt, mit einer Trennwand, die mindestens zwei in derselben Ebene übereinander und/oder nebeneinander angeordnete Trennwandelemente aufweist, die durch mindestens eine Steck- und/oder Klemmverbindung miteinander verbunden sind, mit einem zwischen Kolonneninnenwand und der der Kolonneninnenwand zugewandten Stirnseite der Trennwandelemente angeordnetem Dichtprofil.

Eine solche Kolonne ist aus der EP 1 088 577 bekannt. Hier sind zur Befestigung von Böden Einschweißungen an der Kolonnenwand erforderlich.

In der internationalen Patentanmeldung WO 99/01193 ist eine Trennwand für Kolonnen, die Trennungen und/oder chemische Reaktionen durchführt offenbart. Die Trennwand besteht aus mehreren in derselben Ebene übereinander und/oder nebeneinander angeordneten Trennwandelementen. Die Trennwandelemente sind an Kolonnenböden, horizontal erstreckenden Platten oder Gittern angeordnet. Diese sind wiederum an Unterstützungsringen, die an der Kolonneninnenwand angeordnet sind, befestigt. Eine ähnliche Konstruktion ist auch aus der BE-A-576656 bekannt, bei der außen an der Kolonnenwand Befestigungsringe angeordnet sind.

Nachteilig an diesem Stand der Technik ist, dass nur an den vorgegebenen Unterstützungsringen an der Kolonneninnenwand Kolonnenböden, horizontal erstreckenden Platten oder Gitter angeordnet werden können. Die Unterstützungsringe sind in der Regel fest mit der Kolonneninnenwand verschweißt, so dass ein Versetzen der Unterstützungsringe nur unter großem Aufwand möglich ist. D.h. der Abstand zwischen Kolonnenböden, horizontal erstreckenden Platten oder Gittern, zwischen denen Packungen einbringbar sind, ist nicht variabel.

Ein weiterer Nachteil bei der o.g. Patentanmeldung ist, dass zwischen zwei Trennwandelementen Undichtigkeiten auftreten können. Auch bei Trennwandelementen die durch Klemm- und/oder Steckverbindungen miteinander verbunden sind, können Undichtigkeiten auftreten, da Fehler bei der Fertigung der Klemm- und/oder Steckverbindungen auftreten können. Bei einem gewissen Spiel in der Klemm- bzw. Steckverbindungen, kommt es zu Undichtigkeiten bzw. Druckverlusten.

Aufgabe der Erfindung ist es, eine Trennwand der eingangs genannten Art so zu verbessern, dass auf konstruktiv einfache und kostengünstige Art und Weise, unabhängig von fest an die Kolonneninnenwand angebrachten Unterstützungsringen, Kolonneneinbauten und/oder Kolonnenböden an jede Stelle der Kolonne eingebracht werden können. Ferner ist es Aufgabe der Erfindung, auf einfache und kostengünstige Art und Weise die Zwischenräume der einzelnen Trennwandelemente, d.h. die Klemm- und/oder Steckverbindungen dauerhaft und sicher abzudichten.

Diese Aufgaben werden erfindungsgemäß dadurch gelöst,
- dass eine Befestigungsvorrichtung für die Trennwand an der Kolonneninnenwand vorgesehen ist,
- dass seitliche Befestigungsteile der Trennwand vorgesehen sind, die Einbauten der Kolonne und/oder Kolonnenböden tragen können, und
- dass die Befestigungsteile Profile sind, deren Oberseiten waagerecht in der Kolonne verlaufen.

Dadurch, dass die Trennwand selber Kolonneneinbauten trägt, wird auf konstruktiv einfache und kostengünstige Art und Weise, eine sehr variable Möglichkeit geschaffen, Kolonneneinbauten, wie beispielsweise Kolonnenböden und/oder Packungen, nachträglich an jede beliebige Position in der Kolonne einzubringen. Das Einbringen der Kolonneneinbauten ist dann unabhängig von Unterstützungsringen, die an der Kolonneninnenwand angebracht sind.

Dies wird durch seitlich an den Trennwandelementen angeordnete Befestigungsteile geschaffen. Hierdurch kann leicht jede gewünschte Einbauhöhe für Kolonneneinbauten erreicht werden. Wahlweise können Trennwandelemente verwendet werden, die Befestigungselemente im unteren, mittleren oder oberen seitlichen Bereich aufweisen. Je nach Einbauhöhe sind Trennwandelemente mit unterschiedlich hoch an den Trennwandelementen angeordneten Befestigungsteilen einsetzbar. Hierdurch kann beim Zusammenbau der Trennwand die gewünschte Einbauposition der einzelnen Kolonneneinbauten, wie beispielsweise Stoffaustauschböden, erreicht werden.

Günstig ist es, wenn die seitlichen Befestigungsteile, insbesondere kraft-und/oder stoffschlüssig, an den Trennwandelementen befestigt sind. Hierdurch wird ein dauerhaft sicherer Halt der Befestigungselemente an den Trennwandelementen geschaffen. Die Befestigungsteile können entweder nur an einer Seite der Trennwandelemente oder an beiden Seiten der Trennwandelemente angeordnet sein.

Die Befestigungsteile stellen Profile, insbesondere rechteckige Profile, dar, die senkrecht zur Kolonneninnenwand verlaufen. Die Oberseiten der Befestigungsteile, die waagerecht verlaufen, dienen als Auflage für Kolonneneinbauten. Die Befestigungsteile können unterschiedliche Längen aufweisen. Je nach Einbaupositionen der Trennwandelemente sind die Befestigungsteile kürzer oder länger. Ein Trennwandelement, welches nahe an der Kolonneninnenwand liegt, weist beispielsweise ein kürzeres Befestigungsteil auf, als ein Trennwandelement, welches mittig in der Trennwand angeordnet ist. Es ist nicht zwingend, dass die Oberseiten der Profile waagerecht verlaufen.

Eine weitere vorteilhafte Ausgestaltung Erfindung sieht vor, dass die Befestigungsteile zumindest je eine Halterungsvorrichtung, insbesondere eine Bohrung, zur sicheren Aufnahme der Kolonneneinbauten, aufweisen. An dieser Halterungsvorrichtung werden die Kolonneneinbauten lösbar befestigt, so dass ein sicherer und fester Sitz der Kolonneneinbauten gewährleistet ist. Die Halterungsvorrichtung kann verschiedenartig ausgebildet sein. Eine einfache Lösung schaffen Bohrungen in den Befestigungsteilen. Wahlweise können eine oder mehrere Bohrungen in den Befestigungsteilen angeordnet sein. Diese verlaufen idealerweise senkrecht oder waagerecht durch das Profil. Durch einfache Schraubverbindungen sind die Kolonneneinbauten an den Befestigungsteilen befestigbar. Die Halterungsvorrichtungen können auch Steck- oder Klemmverbindungen aufweisen, die die entsprechenden Kolonneneinbauten formschlüssig aufnehmen Eine einfache Verbindung stellen Rast- oder Klippverbindungen dar.

Günstig ist es weiterhin, wenn die Trennwandelemente zumindest je eine Halterungsvorrichtung, insbesondere eine Bohrung, zur Aufnahme der Befestigungsteile oder der Kolonneneinbauten, aufweisen.

Günstig ist es, wenn die der Kolonneninnenwand zugewandten Stirnseiten der erfindungsgemäßen Trennwandelemente durch eine Steck- und/oder Klemmverbindung mit dem Dichtprofil verbunden ist. Hierdurch lässt sich auf einfache Art und Weise eine sichere und feste Verbindung zwischen den Trennwandelementen und dem Dichtprofil schaffen. Die Steck- und/oder Klemmverbindung zum Dichtprofil ist die gleiche Steck- und/oder Klemmverbindung, wie zwischen den Trennwandelementen untereinander. Alternativ dazu kann die der Kolonneninnenwand zugewandte Stirnseite der Trennwandelemente durch eine stoffschlüssige Verbindung mit dem Dichtprofil verbunden werden. Eine stoffschlüssige Verbindung, wie beispielsweise eine Schweißverbindung, schafft eine dauerhaft feste und dichte Verbindung zwischen Dichtprofil und Trennwandelement. Eine Steck- und/oder Klemmverbindung hat den Vorteil, dass die Trennwandelemente leicht von der Kolonneninnenwand bzw. von dem Dichtprofil an der Kolonneninnenwand gelöst werden können.

Eine vorteilhafte Ausgestaltung der Befestigungsvorrichtung sieht vor, dass das Dichtprofil in einer Ebene mit den Trennwandelementen angeordnet ist. Insbesondere von Vorteil ist es, wenn das Dichtprofil die gleiche Stärke wie die Trennwandelemente aufweist. Die Klemmprofile überlappen die Trennwandelemente sowie das Dichtprofil beidseitig und klemmen auf diese Weise Dichtprofil und Trennwandelemente zwischen sich. Dadurch, dass das Dichtprofil fest an der Kolonneninnenwand bzw. an Vorsprüngen, die an der Kolonneninnenwand angeordnet sind, angebracht ist, können die Trennwandelemente fest an dem Dichtprofil angebracht werden.

Von großem Vorteil ist es weiterhin, wenn das Dichtprofil und die Trennwandelemente durch ein Druckelement auseinander drückbar sind. Dies bedeutet, dass bei oder nach dem Anbringen der Klemmprofile der Befestigungsvorrichtung der Zwischenraum zwischen Stirnseite der Trennwandelemente und Dichtprofil in waagerechter Richtung verbreiterbar ist, so dass einerseits das Dichtprofil fest an die Kolonneninnenwand angedrückt wird und andererseits die Trennwandelemente untereinander zusammen gepresst werden. Hierdurch wird eine sichere Abdichtung der Trennwandelemente miteinander und eine sichere Abdichtung des Dichtprofils zur Kolonneninnenwand geschaffen. Die aus mehreren Trennwandelementen bestehende Trennwand erhält dadurch mehr Stabilität und Dichtigkeit. Das Druckelement kann eine Art Keil sein, der nachträglich von oben in den Zwischenraum eingebracht wird. Nach dem Zusammenstecken einer Reihe von Trennwandelementen, werden diese, durch das Einbringen des Druckelements in einen Zwischenraum oder in beide Zwischenräume, zusammengeschoben, so dass sie absolut fest und belastbar in der Kolonne angeordnet sind. Nach Einbringen des Druckelements und Zusammendrücken der Trennwandelemente einer Reihe wird die nächste, darüber liegende Reihe von Trennwandelementen auf die untere Reihe aufgesteckt und wiederum mittels Druckelementen zusammengeschoben. Das Druckelement kann auch horizontal zwischen zwei Trennwandelemente einbracht werden, d.h. zwischen zwei in einer Ebene übereinander liegenden Trennwandelementen.

Denkbar ist auch eine Vorrichtung bestehend aus zwei länglichen Profilen, von denen ein Profil an dem Dichtprofil, das andere an dem Trennwandelement anliegt. Die beiden Profile können beispielsweise durch eine Verschiebevorrichtung auseinander gedrückt werden. Die Verschiebevorrichtung besteht beispielsweise aus zwei verschiebbaren Stangen, einem Getriebe durch das die Stangen verschoben werden können und einem Hebel durch den das Getriebe betätigt werden kann.

Die Trennwandelemente und das Dichtprofil können Bohrungen oder Löcher, insbesondere Langlöcher, aufweisen, um kraftschlüssig miteinander verbunden zu werden. Nach Auseinanderdrücken des Zwischenraums durch das Druckelement bzw. nach Zusammenpressen der Trennwandelemente untereinander, können die Trennwandelemente und das Dichtprofil zusätzlich durch Schraubverbindungen sicher und dicht verbunden werden.

Eine weitere vorteilhafte Ausgestaltung der Trennwand sieht vor, dass die Trennwandelemente zur Erleichterung der Ausrichtbarkeit bzw. Montage Griffvorrichtungen aufweisen. Hierdurch können die Trennwandelemente leichter miteinander verbunden werden. Die Griffvorrichtungen sind entweder direkt an den Seiten der Trennwandelemente angeordnet oder an den Befestigungsteilen. Die Befestigungsteile können auch selbst die Funktion von Griffvorrichtungen ausüben.

Um auf einfache und kostengünstige Art und Weise die Zwischenräume der einzelnen Trennwandelemente, d.h. die Klemm- und/oder Steckverbindungen dauerhaft und sicher abzudichten, ist es von Vorteil in den Zwischenräumen der Steck- und/oder Klemmverbindungen der Trennwandelemente Dichtungen, insbesondere Dichtschnüre, anzuordnen. Hierdurch wird die Dichtheit zwischen den Trennwandelementen zusätzlich gewährleistet. Die Dichtungen sind insbesondere Dichtschnüre, die beim Zusammenbau der einzelnen Trennwandelemente in die Klemm- bzw. Steckverbindungen eingebracht werden. Die Dichtschnüre verlaufen idealerweise einstückig über die gesamte Höhe der Trennwandelemente. Es ist aber auch denkbar, dass zwischen jeder einzelnen Klemm- bzw. Steckverbindung eine über die gesamte Länge der Klemm- bzw. Steckverbindungen verlaufende Dichtschnur eingebracht wird. Die Dichtungen können auch in Nuten an den Stirnseiten der Trennwandelemente angeordnet sein. Durch das Zusammenpressen der Trennwandelemente zueinander werden die Dichtschnüre so gestaucht, dass sie eine absolut dichte Verbindung zwischen zwei Trennwandelementen gewährleisten.

Ebenso ist es vorteilhaft, wenn zwischen Dichtprofil und der dem Dichtprofil zugewandten Stirnseite der Trennwandelemente Dichtungen angeordnet sind. Hierdurch wird an der Verbindung zwischen Trennwand und Dichtprofil ebenfalls eine absolut dichte Verbindung geschaffen.

Weiterhin kann in den Zwischenräumen der Steck- und/oder Klemmverbindungen der Trennwandelemente und/oder zwischen Dichtprofil und der dem Dichtprofil zugewandten Seite der Trennwandelemente eine Dichtmasse einbringbar sein. Insbesondere eine selbsthärtende Dichtmasse, die in die Zwischenräume der Steck- und/oder Klemmverbindungen eingebracht wird, schafft eine dichte Verbindung.

Weitere Einzelheiten und Vorteile des Erfindungsgegenstandes ergeben sich aus der nachfolgenden Beschreibung, den zugehörigen Zeichnungen, in der bevorzugte Ausführungsbeispiele mit den dazu notwendigen Einzelheiten dargestellt sind. Es zeigen:
- Fig. 1:: Trennwandelement mit Steck- bzw. Klemmverbindung und Befestigungsteil,
- Fig. 2:: Draufsicht auf eine aus mehreren Trennwandelementen bestehenden Trennwand mit Befestigungsteilen,
- Fig. 3:: senkrechter Schnitt durch einen Teil einer Kolonne, mit Trennwand, Dichtprofil und Befestigungsteilen an einigen Trennwandelementen,
- Fig. 4:: Trennwandelement mit Steck- bzw. Klemmverbindung und Befestigungsteil sowie Griffvorrichtung,
- Fig. 5:: Trennwandelement mit Steck- bzw. Klemmverbindung und Griffvorrichtung,
- Fig. 6:: Draufsicht auf eine aus mehreren Trennwandelementen bestehenden Trennwand mit Befestigungsteilen sowie Griffvorrichtungen an den Befestigungsteilen,
- Fig. 7:: Trennwandelement mit Steck- bzw. Klemmverbindung und Dichtung,
- Fig. 8:: waagerechter Schnitt durch eine Kolonne mit Trennwand bestehend aus mehreren Trennwandelementen mit Befestigungsteilen.

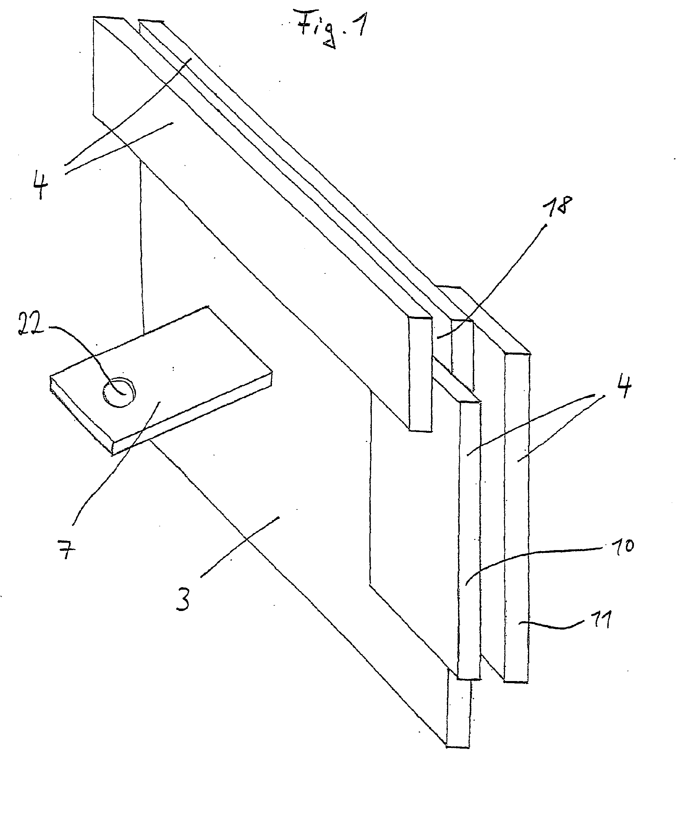

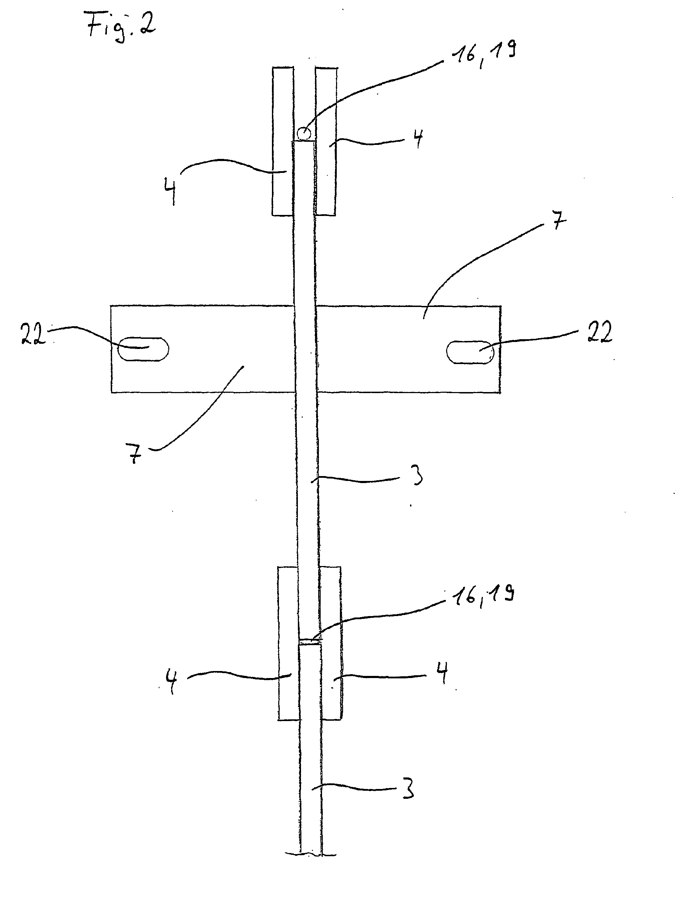

In den Fig. 1 und 2 ist ein bzw. sind zwei Trennwandelemente (3) mit Steck-und/oder Klemmverbindungen (4) an ihren Seitenflächen dargestellt. An den Seiten des Trennwandelements (3) ist ein Befestigungsteil (7) angeordnet. Das Befestigungsteil (7) ist an dem Trennwandelement (3) angeschweißt oder auf kraft- oder formschlüssige Art und Weise lösbar befestigt. Die Befestigungsteile (7) können an jeder beliebigen Position des Trennwandelements (3) angeordnet sein. So können sie beispielsweise auch an den Steck- bzw.

Klemmverbindungen (4) befestigt sein. Die Befestigungsteile (7) können an beiden Trennwandseiten angeordnet sein. Die Größe der Befestigungsteile (7) ist variabel. Je nach Einbauposition des Trennwandelements (3) in der Kolonne (2) ist die Größe der Befestigungsteile (7) wählbar. Die Befestigungsteile (7) oder die Oberseite (13) der Trennwand (1) können Kolonneneinbauten (17), wie beispielsweise Stoffaustauschböden oder Packungen, tragen. Die Trennwand (1) ist so fest in der Kolonne (2) angeordnet, dass sie mit zusätzlichen Gewichten durch Kolonneneinbauten (17) beaufschlagt werden kann.

Zusätzlich können die Befestigungsteile (7) Halterungsvorrichtungen (22) aufweisen, an denen die Kolonneneinbauten (17) befestigt werden können. Die Halterungsvorrichtungen (22) können Steck- oder Klemmverbindungen sein. Eine weitere einfache Variante stellen Bohrungen (22) dar, an denen die Kolonneneinbauten (17) mit Hilfe von Schraubverbindungen lösbar befestigt werden können. Es ist auch möglich, dass die Kolonneneinbauten (17) formschlüssig auf den Befestigungsteilen (7) oder auf der Oberseite (13) der Trennwand (1) aufliegen. Ausreichende Stabilität wird dann durch das Gewicht und die Form der Kolonneneinbauten (17) geschaffen.

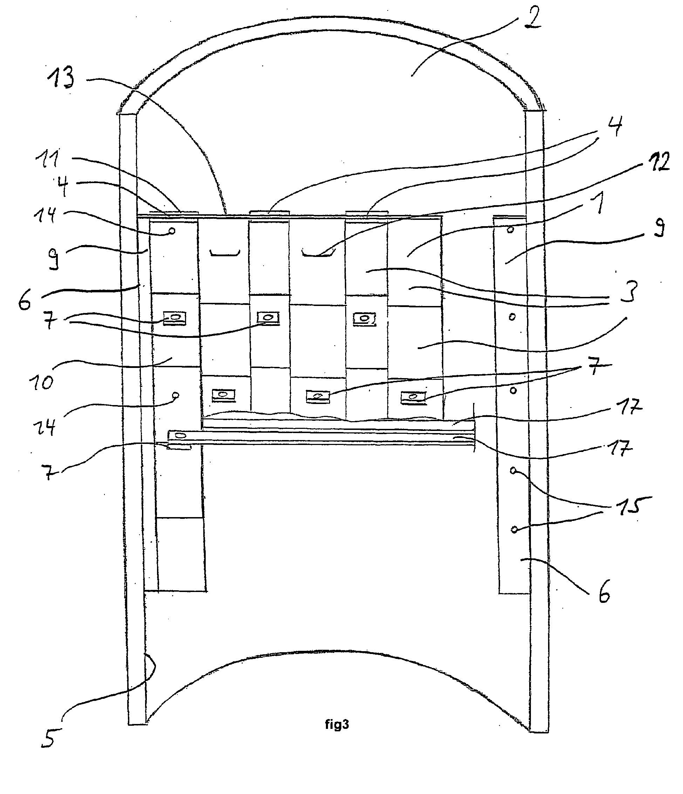

Fig. 3 zeigt einen senkrechten Schnitt durch einen Teil einer Kolonne (2), mit einer Trennwand (1), bestehend aus mehreren zusammensteck- oder zusammenklemmbaren Trennwandelementen (3), und einer Befestigungsvorrichtung (6) für die Trennwand (1) an der Kolonneninnenwand (5). Die Befestigungsvorrichtung (6) wird in diesem Beispiel durch das Dichtprofil (9) gebildet, welches fest an der Kolonneninnenwand (5), beispielsweise durch eine Schweißverbindung, befestigt ist. Die Trennwand (1) teilt die Kolonne (2) in zwei Hälften, wobei die Trennwand (1) den Zulauf in die Kolonne (2) von dem Ablauf aus der Kolonne trennt. Die Trennwand (1) ist an dem Dichtprofil (9) an beiden Seiten der Kolonneninnenwand (5) dicht befestigt.

An einigen Trennwandelementen (3) sind Befestigungsteile (7) mit Halterungsvorrichtungen (22) angeordnet. In der Regel sind in einer Ebene mehrere Trennwandelemente (3) mit Befestigungsteilen (7) angeordnet, so dass eine gute Auflagefläche bzw. Halterung für die Kolonneneinbauten (17) geschaffen wird. Die Kolonneneinbauten (17) können auch zusätzliche Auflageelemente, als weitere Halterungsmöglichkeit für Böden oder ähnliche Kolonneneinbauten, sein.

Einige Trennwandelemente (3) weisen Griffvorrichtungen (12) auf. Diese dienen der besseren Montage bzw. Demontage der Trennwand. Über die Griffvorrichtungen (12) kann beim Zusammenbau der Trennwand (1) besser Kraft auf die einzelnen Trennwandelemente (3) ausgeübt werden, um diese gegeneinander auszurichten.

Die Befestigungsvorrichtung (6), in diesem Ausführungsbeispiel gebildet durch ein an der Kolonneninnenwand (5) angeschweißtes Dichtprofil (9), sowie die Trennwandelemente (3) können Bohrungen oder Löcher, insbesondere Langlöcher, (15, 14) aufweisen, durch die sie kraftschlüssig miteinander verbunden werden können. Die Bohrungen oder Löcher (14) sind insbesondere an den Klemmprofilen (10, 11) der Trennwandelemente (3) angeordnet.

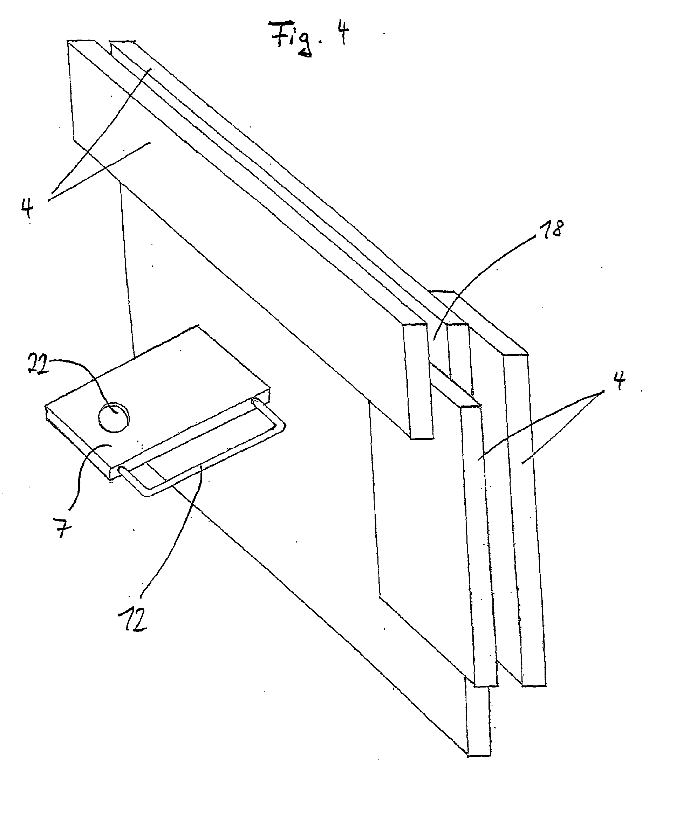

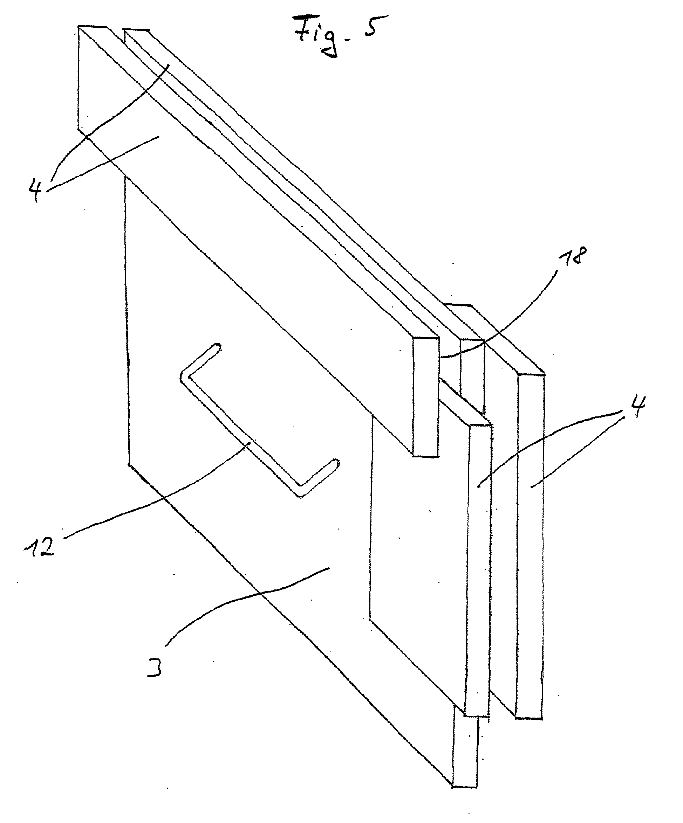

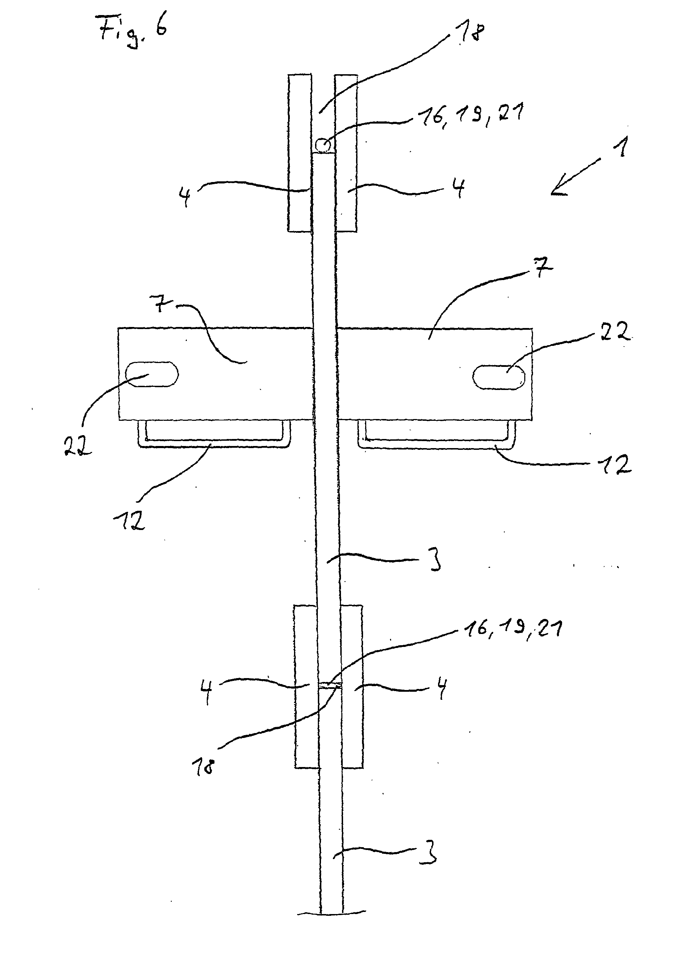

Fig. 4 zeigt ein Trennwandelement (3) mit einem Befestigungsteil (7), welches an der Seite der Trennwandelements (3) angeordnet ist. Die Griffvorrichtung (12) ist an dem Befestigungsteil (7) angebracht. In Fig. 5 ist die Griffvorrichtung (12) direkt an dem Trennwandelement (3) angeordnet. Die Griffvorrichtung (12) besteht aus einem einfachen Profil, welches an dem Trennwandelement (3) befestigt ist. Idealerweise sind auf beiden Trennwandelementseiten Griffvorrichtungen (12) angebracht. Fig. 6 zeigt eine Draufsicht auf eine aus mehreren Trennwandelementen (3) bestehende Trennwand (1) mit Befestigungsteilen (7) sowie Griffvorrichtungen (12) an den Befestigungsteilen (7). An den Befestigungsteilen (7) befinden sich ebenfalls Halterungsvorrichtungen (22). In diesem Beispiel sind als Halterungsvorrichtungen (22) Langlöcher, deren Achse parallel zu der Trennwand (1) verlaufen, dargestellt. Je nach Kolonneneinbauten (17) können die Löcher auch einen anderen Verlauf aufweisen.

Um eine absolut dichte Verbindung nach dem Zusammenstecken der einzelnen Trennwandelemente (3) zu erhalten wird erfindungsgemäß eine Dichtung (19), insbesondere in Form einer Dichtschnur (16) oder einer Dichtmasse (21), in die Zwischenräume (18) der Steck- und/oder Klemmverbindungen (4) eingefügt. Nach den Zusammenstecken bzw. -klemmen der Trennwandelemente (3) wird die Dichtung (19) elastisch verformt und bildet so eine absolut dichte Verbindung zwischen den Trennwandelementen (3).

In Fig. 6 ist im oberen Bereich eine nicht verformte Dichtung (19) bzw. Dichtschnur (16), die in dem Zwischenraum (18) einliegt, dargestellt. Im unteren Teil der Abbindung ist eine durch die beiden zusammengefügten Trennwandelemente (3) verformte Dichtung (19) bzw. Dichtschnur (16) gezeigt. Auf den Boden der Zwischenräume (18) kann auch eine Dichtmasse (21) eingefügt werden, die sich nach dem Zusammenfügen der Trennwandelemente (3) verformt und verhärtet, und so eine dichte Verbindung schafft.

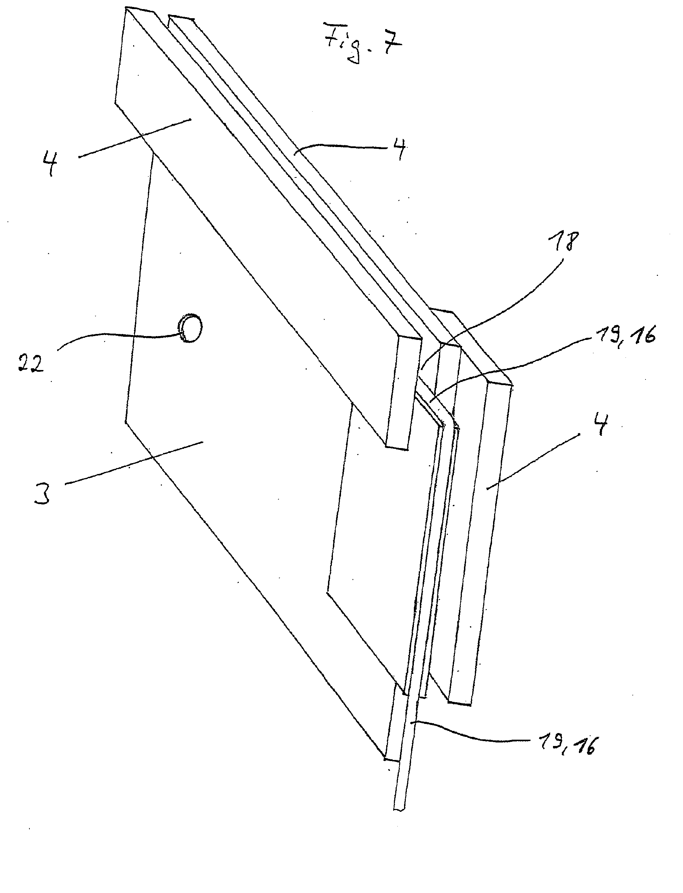

Fig. 7 verdeutlicht nochmals, wie die Dichtung (19) bzw. die Dichtschnur (16) in dem Zwischenraum (18) einliegt. In dieser Fig. ist eine andere Variante der Halterungsvorrichtung (22) dargestellt. Das Trennwandelement (3) weist eine Halterungsvorrichtung (22), in diesen Fall eine Bohrung, auf, an der Kolonneneinbauten (17) befestigt werden können. Wahlweise können die Kolonneneinbauten (17) direkt an der Trennwand (3) oder an einem an der Trennwand (3) angebrachten Befestigungsteil (7) befestigt sein.

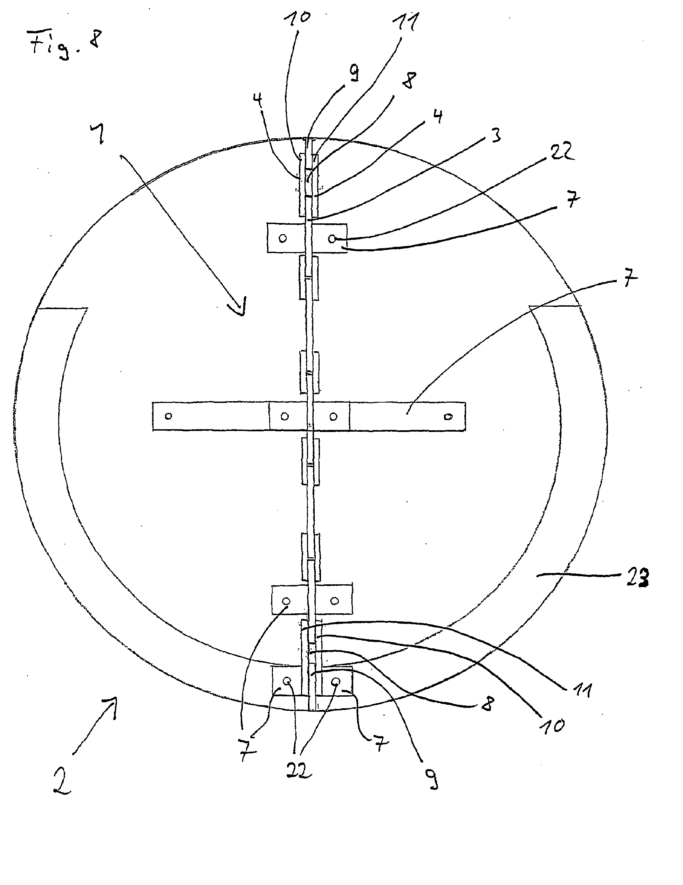

Fig. 8 zeigt einen waagerechten Schnitt durch eine Kolonne (2) mit Trennwand (1), bestehend aus mehreren Trennwandelementen (3). An jedem zweiten Trennwandelement (3) sind auf beiden Seiten Befestigungsteile (7) angebracht. Auf diese oder an diesen können entweder die Kolonneneinbauten (17) direkt angeordnet sein oder weitere Auflageelemente, auf denen wiederum die Kolonneneinbauten (17) angeordnet sind. Zwischen Dichtprofil (9) und jeweils äußerstem Trennwandelement (3) wird ein Zwischenstück (8), insbesondere ein Druckelement, eingebracht. Das Zwischenstück (8) kann dabei beispielsweise ein Keil sein, der von oben in diesen Zwischenraum eingebracht wird. Dieses eingebrachte Zwischenstück (8) gewährleistet den absolut festen Sitz der Trennwand (1). Die Trennwandelemente (3) werden durch das Einbringen des Zwischenstücks fest und dicht aneinander gedrückt, so dass die Trennwand (1) ausreichende Stabilität erreicht, um die weiteren Kolonneneinbauten (17) mühelos zu tragen. Zur Unterstützung kann die Trennwand (1) zusätzlich an einem Stützring (23) befestigt sein.

## Patentansprüche

1. Kolonne (2) zur Destillation insbesondere Packungs- und/oder Bodenkolonne, die Trennungen und/oder chemische Reaktionen durchführt, mit einer Trennwand (1), die mindestens zwei in derselben Ebene übereinander und/oder nebeneinander angeordnete Trennwandelemente (3) aufweist, die durch mindestens eine Steck- und/oder Klemmverbindung (4) miteinander verbunden sind, mit einem zwischen Kolonneninnenwand (5) und der der Kolonneninnenwand (5) zugewandten Stirnseite der Trennwandelemente (3) angeordnetem Dichtprofil (9) **dadurch gekennzeichnet,**
- **dass** eine Befestigungsvorrichtung (6) für die Trennwand (1) an der Kolonneninnenwand (5) vorgesehen ist,
- **dass** seitliche Befestigungsteile (7) der Trennwand (1) vorgesehen sind, die Einbauten (17) der Kolonne und/oder Kolonnenböden tragen können, und
- **dass** die Befestigungsteile (7) Profile sind, deren Oberseiten waagerecht in der Kolonne (2) verlaufen.

2. Kolonne nach Anspruch 1, **dadurch gekennzeichnet, dass** die seitlichen Befestigungsteile (7) an den Trennwandelementen (3) angeordnet sind.

3. Kolonne nach Anspruch 1 oder 2, **dadurch gekennzeichnet, dass** die Befestigungsteile (7) zumindest je eine Bohrung (22), zur Aufnahme der Kolonneneinbauten (17), aufweisen.

4. Kolonne nach mindestens einem der vorherigen Ansprüche, **dadurch gekennzeichnet, dass** die Trennwandelemente (3) zumindest je eine Bohrung (22), zur Aufnahme der Befestigungsteile (7) oder der Kolonneneinbauten (17), aufweisen.

5. Kolonne nach mindestens einem der vorherigen Ansprüche, **dadurch gekennzeichnet, dass** die der Kolonneninnenwand (5) zugewandte Stirnseite der Trennwandelemente (3) durch eine Steck- und/oder Klemmverbindung (4) mit dem Dichtprofil (9) und/oder der Befestigungsvorrichtung (6) verbunden ist.

6. Kolonne nach mindestens einem der vorherigen Ansprüche, **dadurch gekennzeichnet, dass** zwei Klemmprofile (10, 11), der der Kolonneninnenwand (5) zugewandten Trennwandelemente (3), das Dichtprofil (9) beidseitig überlappen.

7. Kolonne nach mindestens einem der vorherigen Ansprüche, **dadurch gekennzeichnet, dass** zwischen zwei Trennwandelementen (3) und/oder zwischen Trennwandelement (3) und Dichtprofil (9) bzw. Befestigungsvorrichtung (6) zumindest ein Zwischenstück (8), als Druckelement, insbesondere horizontal oder vertikal angordnet ist.

8. Kolonne nach mindestens einem der vorherigen Ansprüche, **dadurch gekennzeichnet, dass** die Trennwandelemente (3) und das Dichtprofil (9) bzw. die Befestigungsvorrichtung (6) Bohrungen oder Löcher (14, 15) aufweisen.

9. Kolonne nach mindestens einem der vorherigen Ansprüche, **dadurch gekennzeichnet, dass** die Trennwandelemente (3) zur Erleichterung der Ausrichtbarkeit bzw. Montage Griftvorrichtungen (12) aufweisen.

10. Kolonne nach einem der vorherigen Ansprüche, **dadurch gekennzeichnet, dass** in den Zwischenräumen (18) der Steck-und/oder Klemmverbindungen (4) der Trennwandelemente (3) Dichtungen (19) angeordnet sind.

11. Kolonne nach Anspruch 10, **dadurch gekennzeichnet, dass** die Dichtungen Dichtschnüre (20) sind.

12. Kolonne nach Anspruch 10 oder 11, **dadurch gekennzeichnet, dass** die Dichtungen (19) zwischen Dichtprofil (9) und der dem Dichtprofil (9) zugewandten Stirnseite der Trennwandelemente (3) angeordnet sind.

13. Kolonne nach einem der Ansprüche 10 bis 12, **dadurch gekennzeichnet, dass** in den Zwischenräumen (18) der Steck-und/oder Klemmverbindungen (4) der Trennwandelemente (3) und/oder zwischen Dichtprofil (9) und der dem Dichtprofil (9) zugewandten Seite der Trennwandelemente (3) eine Dichtmasse (21) einbringbar ist.

## Claims

1. Column (2) for distillation, particularly a packed and/or plate column, which carries out separations and/or chemical reactions, with a partition plate (1), which has at least two partition elements (3) arranged on top of each other or next to each other in the same plane, which are connected to each other by at least a plug and/or clamp connection (4), with a sealing profile (9) arranged between the inside wall (5) of the column and the front face of the partition elements (3) facing the inside wall (5) of the column, **characterised in that**
- a fixing device (6) is provided for the partition (1) on the inside wall (5) of the column,
- side fixing parts (7) of the partition (1) are provided, which may have parts (17) built in to the column and/or column plates, and
- the fixing parts (7) are profiles, the surfaces of which run horizontally in the column (2).

2. Column according to claim 1, **characterised in that** the side fixing parts (7) are arranged on the partition elements (3).

3. Column according to claim 1 or 2, **characterised in that** the fixing parts (7) have at least one hole (22) for taking the parts (17) built in to the column.

4. Column according to at least one of the previous claims, **characterised in that** the partition elements (3) have at least one hole (22) for taking each of the fixing parts (7) or the parts (17) built in to the column.

5. Column according to at least one of the previous claims, **characterised in that** the front face of the partition elements (3) facing the inside wall (5) of the column is connected to the sealing profile (9) and/or the fixing device (6) through a plug and/or clamp connection (4).

6. Column according to at least one of the previous claims, **characterised in that** two clamping profiles (10, 11) of the partition elements (3) facing the inside wall (5) of the column overlap the sealing profile (9) on both sides.

7. Column according to at least one of the previous claims, **characterised in that** at least one intermediate part (8) is arranged between two partition elements (3) and/or between the partition element (3) and the sealing profile (9) or fixing device (6), particularly horizontally or vertically, as a pressure element.

8. Column according to at least one of the previous claims, **characterised in that** the partition elements (3) and the sealing profile (9) or the fixing device (6) have holes (14, 15).

9. Column according at least one of the previous claims, **characterised in that** the partition elements (3) have handle devices (12) for making adjustment work or assembly easier.

10. Column according to one of the previous claims, **characterised in that** seals (19) are arranged in the intermediate areas (18) of the plug and/or clamp connections (4) of the partition elements (3).

11. Column according to claim 10, **characterised in that** the seals are gasket cords (20).

12. Column according to claim 10 or 11, **characterised in that** the seals (19) are arranged between the sealing profile (9) and the front face of the partition elements (3) facing the sealing profile (9).

13. Column according to one of claims 10 to 12, **characterised in that** a sealant (21) may be put in the intermediate areas (18) of the plug and/or clamp connections (4) of the partition elements (3) and/or between the sealing profile (9) and the face of the partition elements (3) facing the sealing profile (9).

## Revendications

1. Colonne (2) de distillation, en particulier colonne à garnissage et/ou à plateaux, qui réalise des séparations et/ou des réactions chimiques, comprenant une cloison (1), qui présente au moins deux éléments de cloison (3) superposés et/ou juxtaposés dans le même plan, assemblés entre eux par au moins un assemblage par emboîtement et/ou serrage (4), un profilé d'étanchéité (9) disposé entre la paroi intérieure de colonne (5) et le côté frontal des éléments de cloison (3), tourné vers la paroi intérieure de colonne (5), **caractérisée en ce que**
- il est prévu un dispositif de fixation (6) pour la cloison (1) sur la paroi intérieure de colonne (5),
- sont prévus des éléments de fixation latéraux (7) de la cloison (1), qui peuvent supporter des inserts (17) de la colonne et/ou des plateaux de colonne, et
- les éléments de fixation (7) sont des profilés, dont les côtés supérieurs s'étendent horizontalement dans la colonne (2).

2. Colonne suivant la revendication 1, **caractérisée en ce que** les éléments de fixation latéraux (7) sont disposés sur les éléments de cloison (3).

3. Colonne suivant l'une des revendications 1 et 2, **caractérisée en ce que** les éléments de fixation (7) présentent au moins chacun un alésage (22) destiné à recevoir les inserts de colonne (17).

4. Colonne suivant l'une au moins des revendications précédentes, **caractérisée en ce que** les éléments de cloison (3) présentent chacun au moins un alésage (22) destiné à recevoir les éléments de fixation (7) ou les inserts de colonne (17).

5. Colonne suivant l'une au moins des revendications précédentes, **caractérisée en ce que** le côté frontal des éléments de cloison (3), tourné vers la paroi intérieure de colonne (5), est assemblé par un assemblage par emboîtement et/ou serrage (4) avec le profilé d'étanchéité (9) et/ou le dispositif de fixation (6).

6. Colonne suivant l'une au moins des revendications précédentes, **caractérisée en ce que** deux profilés de serrage (10, 11) des éléments de cloison (3), tournés vers la paroi intérieure de colonne (5), chevauchent bilatéralement le profilé d'étanchéité (9).

7. Colonne suivant l'une au moins des revendications précédentes, **caractérisée en ce qu'**au moins une pièce intercalaire (8), en tant qu'élément de pression, est disposée, en particulier horizontalement ou verticalement, entre deux éléments de cloison (3) et/ou entre l'élément de cloison (3) et le profilé d'étanchéité (9) ou le dispositif de fixation (6).

8. Colonne suivant l'une au moins des revendications précédentes, **caractérisée en ce que** les éléments de cloison (3) et le profilé d'étanchéité (9) ou le dispositif de fixation (6) présentent des alésages ou des trous (14, 15).

9. Colonne suivant l'une au moins des revendications précédentes, **caractérisée en ce que** les éléments de cloison (3) présentent des dispositifs de prise (12) pour faciliter l'alignement ou le montage.

10. Colonne suivant l'une des revendications précédentes, **caractérisée en ce que** des garnitures d'étanchéité (19) sont disposées dans les espaces intermédiaires (18) des assemblages par emboîtement et/ou serrage (4) des éléments de cloison (3).

11. Colonne suivant la revendication 10, **caractérisée en ce que** les garnitures sont des cordons d'étanchéité (20).

12. Colonne suivant l'une des revendications 10 et 11, **caractérisée en ce que** les garnitures d'étanchéité (19) sont disposées entre le profilé d'étanchéité (9) et le côté frontal des éléments de cloison (3), tourné vers le profilé d'étanchéité (9).

13. Colonne suivant l'une des revendications 10 à 12, **caractérisée en ce qu'**un matériau d'étanchéité (21) peut être introduit dans les espaces intermédiaires (18) des assemblages par emboîtement et/ou serrage (4) des éléments de cloison (3) et/ou entre le profilé d'étanchéité (9) et le côté des éléments de cloison (3), tourné vers le profilé d'étanchéité (9).
